# EUROPEAN PATENT SPECIFICATION

(11) **EP 1 710 929 B1**
(45) Date of publication and mention of the grant of the patent: **03.12.2008**
(21) Application number: 04710977.2
(22) Date of filing: 13.02.2004
(51) Int. Cl.: H04B 7/06, H04B 7/04

(54) **MIMO system with eigenvalues feedback information**
MIMO System mit Rückkopplungsinformation der Eigenwerte
Système MIMO avec rétroaction contenant des valeurs propres

(43) Date of publication of application: 11.10.2006
(73) Proprietor: Panasonic Corporation, Kadoma-shi Osaka 571-8501 (JP)
(72) Inventor: HOSHINO, Masayuki, Chuo-ku, Osaka-shi, Osaka 540-6319 (JP); CHEN, Kuilin, Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2004/001596
(87) International publication number: WO 2005/078957

(56) References cited:
- WO-A-02/078211
- WO-A-03/041300
- JP-A- 2003 318 853
- HARA Y. ET AL: 'Sojushin Beam Keisei o Mochiiru MIMO system no Weight Seigyoho.' THE INSTITUTE OF ELECTRONICS, INFORMATION AND COMMUNICATION ENGINEERS GIJUTSU KENKAU HOKOKU. vol. 102, no. 282, 23 August 2002, pages 33 - 40, XP002984601
- IHI S. ET AL: 'Soshin Denryoku Seigyo o Tekiyo shita MIMO Tekio Hencho ni Kansuru Kento.' THE INSTITUTE OF ELECTRONICS, INFORMATION AND COMMUNICATION ENGINEERS. 03 March 2003, page 621, XP002986775
- JIKEI ET AL: 'Saiteki Denryoku Haibun o Okanau Soshin Antena Sentakugata MIMO Channel Denso Hoshiki.' THE INSTITUTE OF ELECTRONICS, INFORMATION AND COMMUNICATION ENGINEERS SOGO TAIKAI KOEN RONBUNSHU. 03 March 2003, page 622, XP002983100
- SUDO K. ET AL: 'MIMO System ni Okeru Throughput Saidakai Soshin Seigyoho.' THE INSTITUTE OF ELECTRONICS, INFORMATION AND COMMUNICATION ENGINEERS GIJUTSU KENKYU HOKOKU. vol. 103, no. 460, 14 November 2003, pages 133 - 138, XP002986777

## Description

### Technical Field

The present invention relates to a communication apparatus and a communication method for use in a communication system using MIMO (Multiple-Input Multiple-Output).

### Background Art

In recent years, MIMO (Multiple-Input Multiple-Output) has been drawing attention as a system that utilizes a limited frequency band efficiently and implements high-speed transmission.

MIMO is a system that uses array antennas for both transmission and reception, and transmits and receives independent signals simultaneously in the same band by a plurality of eigenvectors. By using this MIMO, it is possible to achieve transmission capacity increase without expanding a frequency band.

The conventional communication system using MIMO forms a predetermined directivity by array antennas on a transmission side, transmit signals from the antennas, perform eigenvalue calculation on a reception side, calculate an eigenvector, find effective channel quality such as SNR (Signal to Noise Ratio), feed back these information to the transmission side, update the directivity on the transmission side based on the fed back eigenvector, and adaptively control a coding rate based on the quality information, thereby optimizing communication channel capacity.

However, in the conventional communication systems using MIMO, the number of transmission streams is fixed. Therefore, when the actual number of eigenvalues is smaller than the transmission channel matrix size in the environment where no obstacle exists between communication apparatuses, streams are transmitted using a path from which only quality almost equal to noise is obtained, and performance degradation by extracting the streams is unpreventable.

WO 02/078211 relates to techniques for processing received signals in a multiple-input multiple-output communication system to recover transmitted signals, and to estimate the characteristics of a multiple-input multiple-output channel. The document discloses a method, wherein a plurality of signals are received by a receiver unit, and the received signals are processed to derive channel state information indicative of the characteristics of transmission channels used for data transmission. The channel state information is transmitted back to the transmitter system and used to adjust the signal processing.

### Disclosure of Invention

It is therefore an object of the present invention to provide a communication apparatus and a communication method whereby, in a communication system using MIMO, streams are not transmitted using a path from which only quality substantially equal to noise is obtained, and performance improvement can be achieved.

This object is achieved by adaptively controlling the number of transmission streams based on the number of effective eigenvalues, that is, the number of eigenvalues greater than a predetermined threshold.

### Brief Description of Drawings

FIG. 1 is a view showing an example of a communication system using MIMO;
FIG.2 is a block diagram showing a configuration of a transmission side communication apparatus according to Embodiment 1 of the present invention;
FIG.3 is a block diagram showing a configuration of a reception side communication apparatus according to Embodiment 1 of the present invention;
FIG. 4 is a sequence diagram showing control procedures between a transmission side communication apparatus and a reception side communication apparatus according to Embodiment 1 of the present invention;
FIG. 5 is a table showing the relationship among eigenvalues, M-ary numbers and coding rates;
FIG.6 is a block diagram showing a configuration of a transmission side communication apparatus according to Embodiment 2 of the present invention;
FIG.7 is a table showing the relationship between the number of effective eigenvalues and space-time coding method; and
FIG.8 is a block diagram showing a configuration of a reception side communication apparatus according to Embodiment 2 of the present invention.

### Best Mode for Carrying Out the Invention

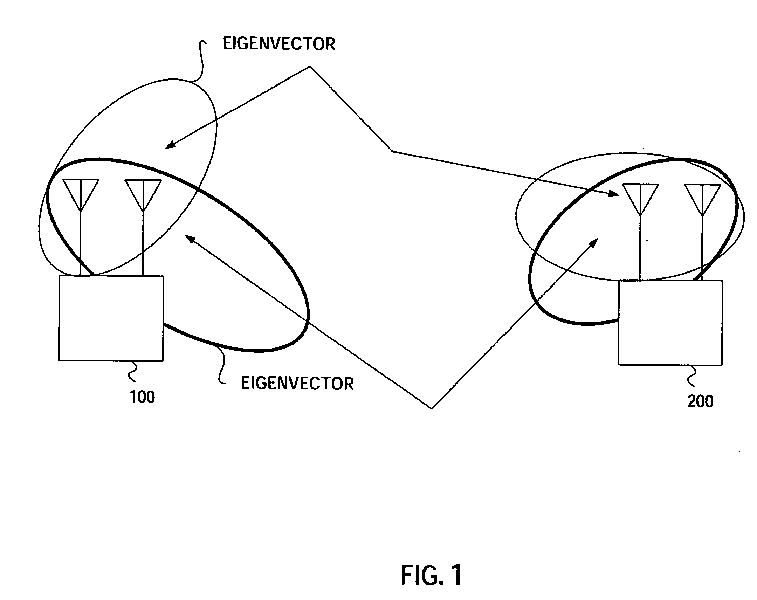

Now, embodiments of the present invention will be described below in detail using the accompanying drawings. In each embodiment, as shown in the communication system in FIG. 1, a case will be described where data is transmitted and received by a plurality of directional beams between transmission side communication apparatus 100 and reception side communication apparatus 200 both provided with array antennas.

### (Embodiment 1)

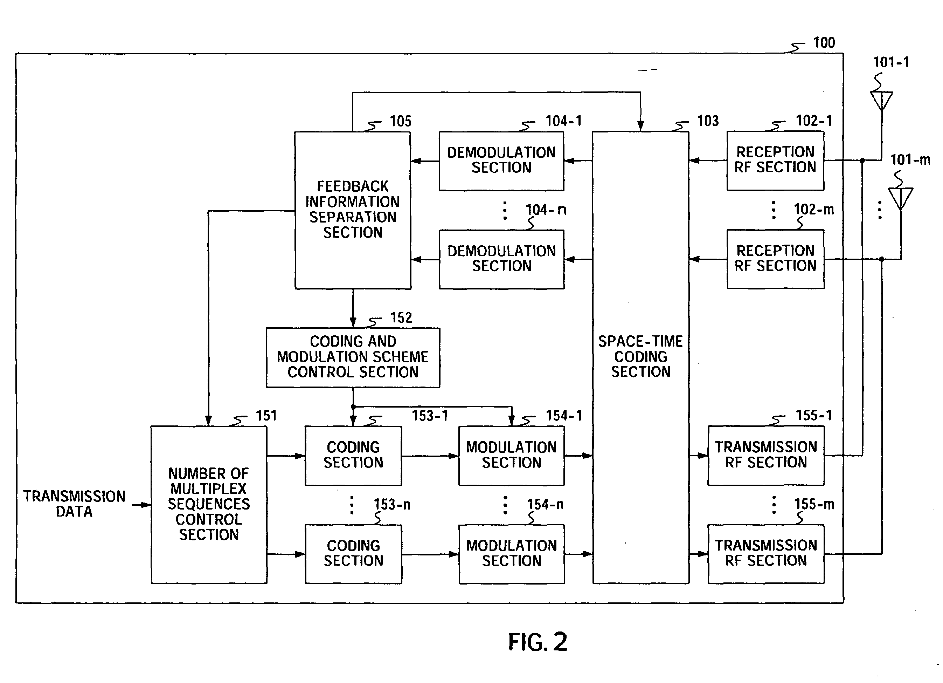

FIG.2 is a block diagram showing a configuration of transmission side communication apparatus 100 according to Embodiment 1 of the present invention.

Communication apparatus 100 is mainly configured with:
antenna elements 101-1 to 101-m; reception RF sections 102-1 to 102-m; space-time coding section 103; demodulation sections 104-1 to 104-n; feedback information separation section 105; number of multiplex sequences control section 151; coding and
modulation scheme control section 152; coding sections 153-1 to 153-n; modulation sections 154-1 to 154-n; transmission RF sections 155-1 to 155-m (where m and n are integer numbers greater than or equal to 2).

A plurality of antenna elements 101-1 to 101-m form an adaptive array antenna, receive signals transmitted from reception side communication apparatus 200, output the signals to corresponding reception RF sections 102-1 to 102-m, and transmit the signals output from corresponding transmission RF sections 155-1 to 155-m to reception side communication apparatus 200 by radio.

Reception RF sections 102-1 to 102-m perform radio processing such as amplification and down-conversion on the signals received by the corresponding antenna elements 101-1 to 101-m, and output the result to space-time coding section 103.

Space-time coding section 103 combines the signals output from reception RF sections 102-1 to 102-m using a predetermined space-time coding method or eigenvector from feedback information separation section 105, and outputs the result to demodulation sections 104-1 to 104-n. In addition, space-time coding section 103 divides the signals output from modulation sections 154-1 to 154-n into the number of antenna elements m, performs complex multiplication processing on the signals using the predetermined space-time coding method or the eigenvector output from feedback information separation section 105, and outputs these signals to transmission RF sections 155-1 to 155-m. As space-time coding, for example, MSSTC (Multi-stratum Space-Time Codes) coding, VBLAST (Vertical Bell Labs Layered Space Time) transmission, STBC (Space Time Block Codes) coding are known.

Demodulation sections 104-1 to 104-n demodulate the signals output from space-time coding section 103 and received by a predetermined space-time coding method and eigenvector, and output the coded data to feedback information separation section 105.

Feedback information separation section 105 performs decoding processing on the signals output from demodulation sections 104-1 to 104-n, extracts information indicating an eigenvector, the number of effective eigenvalues and eigenvalues from feedback information contained in the decoded data, and outputs the information indicating the eigenvector to space-time coding section 103, the information indicating the number of effective eigenvalues to number of multiplex sequences control section 151, and information indicating the eigenvalues to coding and modulation scheme control section 152. Here, an effective eigenvalue refers to an eigenvalue greater than a predetermined threshold among the eigenvalues calculated in reception side communication apparatus 200.

Number of multiplex sequences control section 151 determines the number of transmission data multiplex sequences (the number of transmission streams) based on the number of effective eigenvalues from feedback information separation section 105, performs serial/parallel conversion on a sequence of transmission data into the determined number of sequences, and outputs the converted transmission data to coding sections 153-1 to 153-n. Specifically, number of multiplex sequences control section 151 increases the number of transmission data multiplex sequences as the number of effective eigenvalues increases.

Coding and modulation scheme control section 152 determines the coding rate and modulation scheme based on the eigenvalues from feedback information separation section 105, and indicates the determined coding rate to coding sections 153-1 to 153-n and the determined modulation scheme to modulation sections 154-1 to 154-n. Specifically, coding and modulation scheme control section 152 increases the coding rate and the M-ary number as the eigenvalues become greater.

Coding sections 153-1 to 153-n perform coding on the transmission data at the coding rate indicated by coding and modulation scheme control section 152, and output the coded data to the corresponding modulation sections 154-1 to 154-n.

Modulation sections 154-1 to 154-n modulate the coded data output from the corresponding coding sections 153-1 to 153-n per eigenvector, and output the modulated signals to space-time coding section 103.

Transmission RF sections 155-1 to 155-m perform radio processing such as amplification and up-conversion on the signals output from space-time coding section 103, and output the results to the corresponding antenna elements 101-1 to 101-m.

The above is an explanation of the configuration of transmission side communication apparatus 100 according to Embodiment 1.

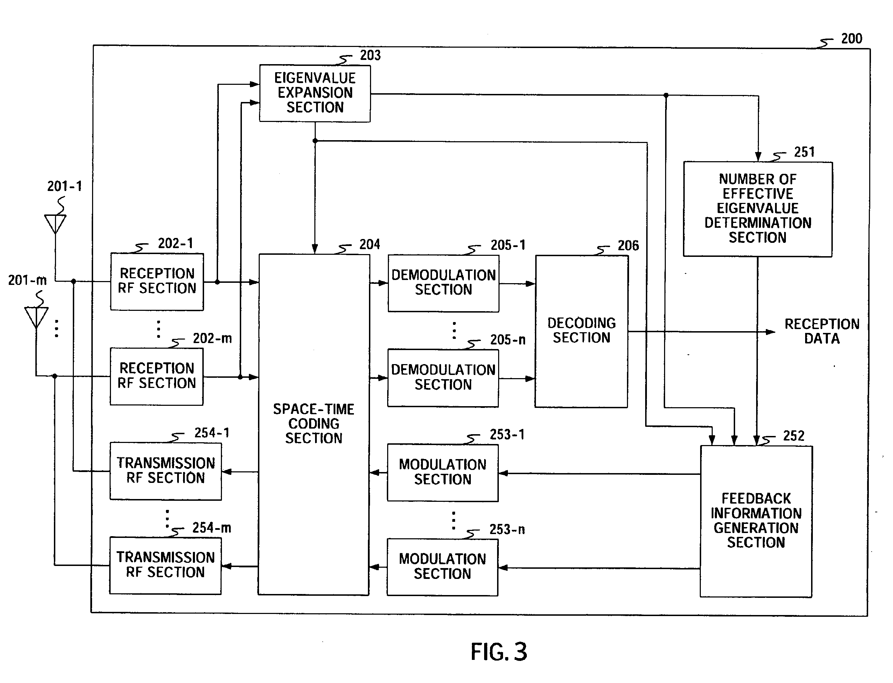

FIG. 3 is a block diagram showing a configuration of reception side apparatus 200 according to Embodiment 1 of the present invention.

Communication apparatus 200 is mainly configured with:
antenna elements 201-1 to 201-m; reception RF sections 202-1 to 202-m; eigenvalue expansion section 203; space-time coding section 204; demodulation sections 205-1 to 205-n; decoding section 206; number of effective eigenvalues determination section 251; feedback information generation section 252; modulation sections 253-1 to 253-n; and transmission RF sections 254-1 to 254-m.

A plurality of antenna elements 201-1 to 201-m form an adaptive array antenna, receive signals transmitted from transmission side communication apparatus 100, output the signals to corresponding reception RF sections 202-1 to 202-m, and transmit the signals output from corresponding transmission RF sections 254-1 to 254-m to transmission side communication apparatus 100 by radio.

Reception RF sections 202-1 to 202-m perform radio processing such as amplification and down-conversion on the signals received by the corresponding antenna elements 201-1 to 201-m, and output baseband signals to eigenvalue expansion section 203 and space-time coding section 204.

Eigenvalue expansion section 203 calculates an input signal eigenvalue and eigenvector in a correlation matrix or a covariance matrix based on the signals output from reception RF sections 202-1 to 202-m, and outputs the eigenvalues to number of effective eigenvalues determination section 251 and feedback information generation section 252, and the eigenvectors to space-time coding section 204 and feedback information generation section 252.

Space-time coding section 204 combines the signals output from reception RF sections 202-1 to 202-m using a predetermined space-time coding method or an eigenvector output from eigenvalue expansion section 203, and outputs the results to demodulation sections 205-1 to 205-n. In addition, space-time coding section 204 performs combination according to the number of multiplex sequences indicated by control information contained in the received signals. Also, space-time coding section 204 divides the signals output from modulation sections 253-1 to 253-n into the number of antenna elements m, performs complex multiplication processing on the signals using a predetermined space-time coding method or eigenvector, and outputs these signals to transmission RF sections 254-1 to 254-m.

Demodulation sections 205-1 to 205-n demodulate the signals output from space-time coding section 204 by amodulation scheme indicated by control information contained in the received signals, and output the coded data obtained by demodulation to decoding section 206.

Decoding section 206 decodes the coded data output in parallel from demodulation sections 205-1 to 205-n at the coding rate indicated by the control information contained in the received signals, and extracts a sequence of received data by performing a serial/parallel conversion based on the number of multiplex sequences indicated by the control information contained in the received signals.

Number of effective eigenvalues determination section 251 compares each eigenvalue output from eigenvalue expansion section 203 to a predetermined threshold, and outputs the number of eigenvalues greater than the predetermined threshold (the number of effective eigenvalues), to feedback information generation section 252.

Feedback information generation section 252 finds effective channel quality based on the eigenvalues output from eigenvalue expansion section 203, generates feedback information indicating the eigenvalue from number of effective eigenvalues determination section 251, and outputs the information to modulation sections 253-1 to 253-m.

Modulation sections 253-1 to 253-n modulate, per eigenvalue, the coded data including the feedback information output from feedback information generation section 252, and output the modulated signals to space-time coding section 204.

Transmission RF sections 254-1 to 254-m perform radio processing such as amplification and up-conversion on the signals output from space-time coding section 204, and output the results to the corresponding antenna elements 201-1 to 201-m.

The above is an explanation of the configuration of reception side communication apparatus 200 according to Embodiment 1.

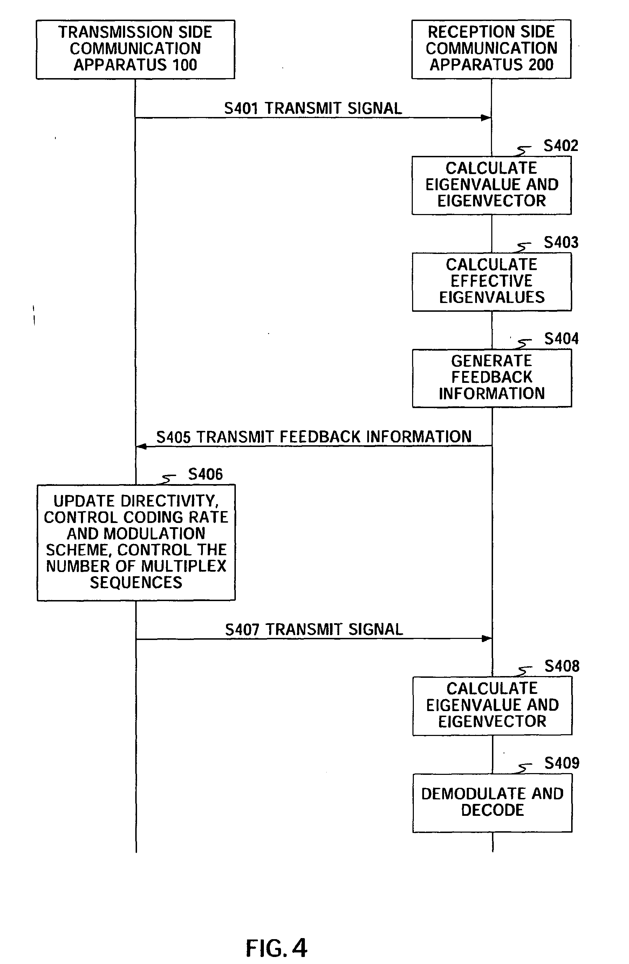

Next, the control procedures between transmission side communication apparatus 100 and reception side communication apparatus 200 will be described using the sequence diagram of FIG.4.

First, transmission side communication apparatus 100 forms a predetermined directivity by array antennas, and transmits signals from the antennas to reception side communication apparatus 200 (S401).

Next, reception side communication apparatus 200 performs eigenvalue calculation using the received signals, calculates eigenvalues and eigenvectors (S402), and the number of effective eigenvalues (S403), generates feedback information including the eigenvalue, the eigenvector and the number of effective eigenvalues (S404), and transmits the feedback information to transmission side communication apparatus 100 (S405).

Transmission side communication apparatus 100 then updates the directivity based on the eigenvectors, adaptively controls the coding rate and the modulation scheme based on the eigenvalues, controls the number of multiplex sequences based on the number of effective eigenvalues (S406), and transmits the signals, in which these control information and the transmission data are combined, from the antennas to reception side communication apparatus 200 (S407).

Reception side communication section 200 then performs eigenvalue calculation using the received signals, calculates eigenvalues and eigenvectors (S408), and performs demodulation and decoding processing based on the eigenvalues transmitted to transmission side communication apparatus 100 and the indicated control information (S409).

After that, steps S403 to S409 are repeated.

In this way, according to this embodiment, in the communication system using MIMO, by adaptively controlling the number of transmission streams based on the number of effective eigenvalues, that is, the number of eigenvalues greater than the predetermined threshold, even when the actual number of eigenvalues is smaller than a transmission channel matrix size, streams are not transmitted using a path from which only quality substantially equal to noise is obtained, and thus performance improvement can be achieved.

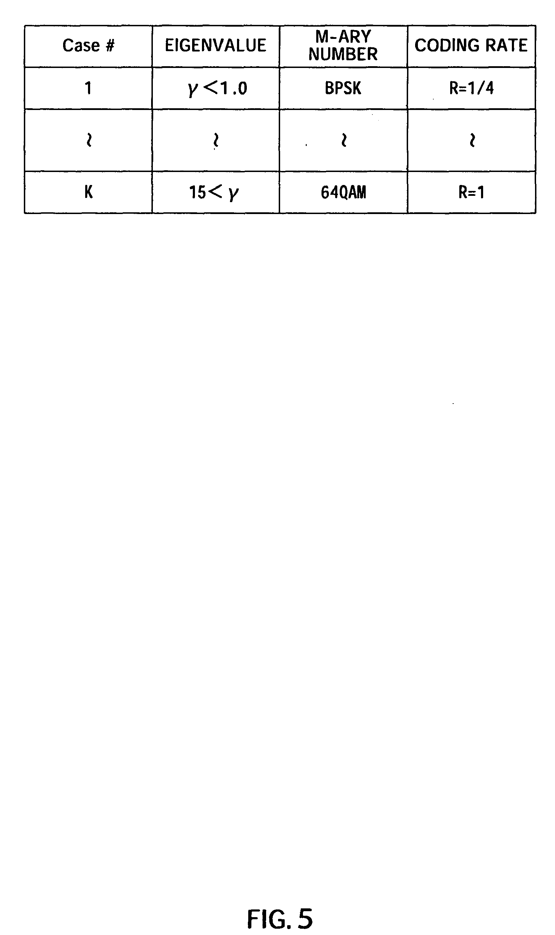

In addition, in this embodiment, by providing a table shown in FIG. 5 showing the relationships among the eigenvalues, M-ary numbers and coding rates, and transmitting feedback information including case numbers (1 to K) corresponding to the eigenvalues instead of the eigenvalues by reception side communication apparatus 200, it is possible to reduce the number of bits in the feedback information. In this case, transmission side communication apparatus 100 transmits a signal in the M-ary number and at the coding rate corresponding to the case number.

### (Embodiment 2)

Hitherto known typical space-time coding methods have unique merits and demerits. Specifically, STBC coding has a great diversity effect and a little spatial multiplex effect, and is unsuitable for high-speed transmission. On the contrary, although VBLAST transmission has great spatial multiplex effect and is suitable for high-speed transmission, it has little diversity effect. MSSTC coding is intermediate between STBC coding andVBLAST transmission, and can obtain both the diversity effect and spatial multiplex effect to a certain degree. When a propagation environment is good, by increasing spatial multiplex effect, and when a propagation environment is poor, byincreasingdiversityeffect, itispossibletoimproveoverall system throughput.

Also, the spatial multiplex effect is considered to be proportional to the number of effective eigenvalues. Accordingly, in Embodiment 2, a case in which the space-time coding method is controlled based on the number of effective eigenvalues will be explained.

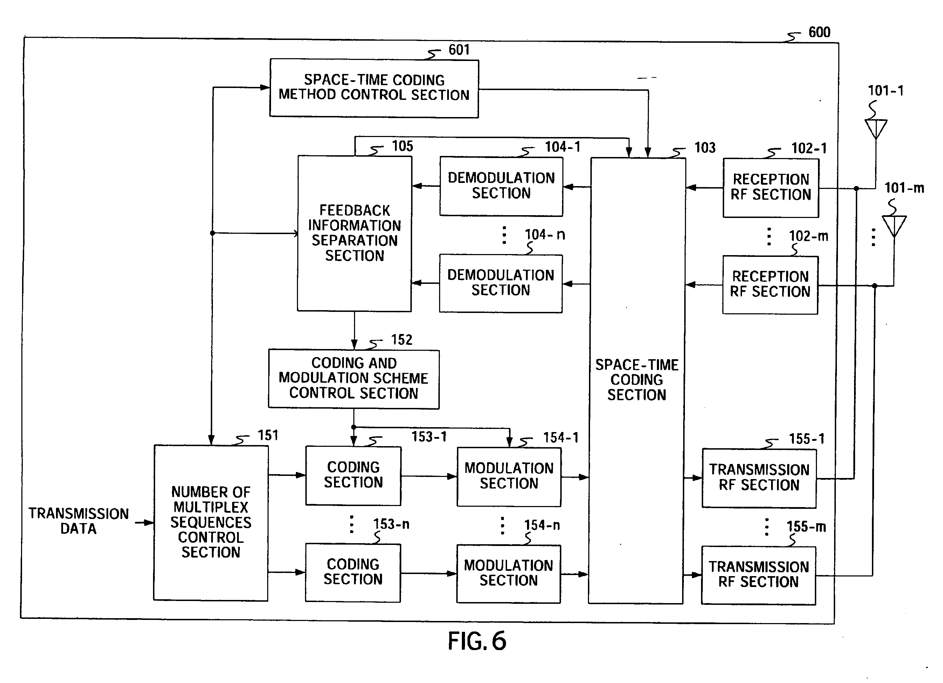

FIG.6 is a block diagram showing a configuration of a transmission side communication apparatus according to Embodiment 2 of the present invention. In transmission side communication apparatus 600 in FIG. 6, component parts that are common with transmission side communication apparatus 100 in FIG.2. are assigned the same codes as in base station apparatus 100, and their descriptions will be omitted.

Compared to transmission side communication apparatus 100 in FIG.2, transmission side communication apparatus 600 shown in FIG. 6 adopts a configuration in which space-time coding method control section 601 is added.

Feedback information separation section 105 outputs information indicating an eigenvector to space-time coding section 103, information indicating the number of effective eigenvalues to number of multiplex sequences control section 151 and space-time coding method control section 601, and information indicating eigenvalues to coding and modulation scheme control section 152.

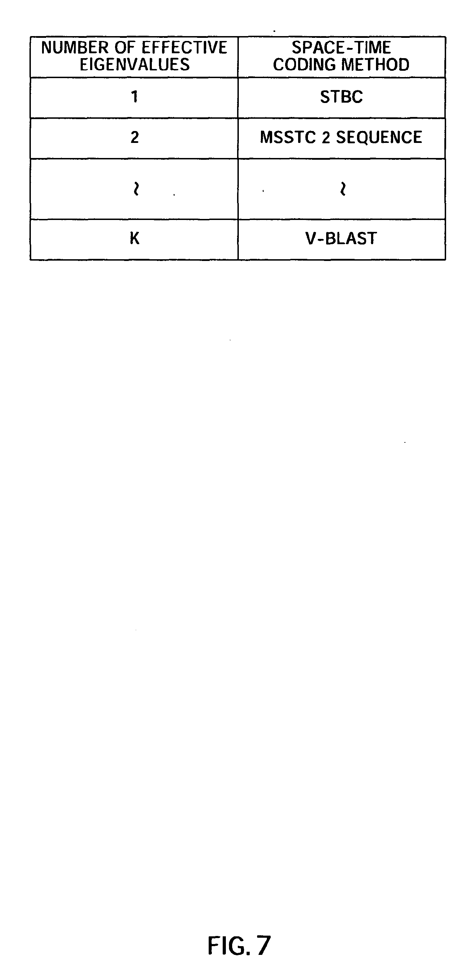

Space-time coding method control section 601 has a table shown in FIG.7, determines a space-time coding method based on the number of effective eigenvalues, and indicates the determined space-time coding method to space-time coding section 103.

Space-time coding section 103 combines the signals output from reception RF sections 102-1 to 102-m by the space-time coding method indicated from space-time coding method control section 601, and outputs the result to demodulation sections 104-1 to 104-n. In addition, space-time coding section 103 divides the signals output from modulation sections 154-1 to 154-n into the number of antenna elements m, performs complex multiplication processing on the signals by the space-time codingmethod indicated from space-time coding method control section 601, and outputs these signals to transmission RF sections 155-1 to 155-m.

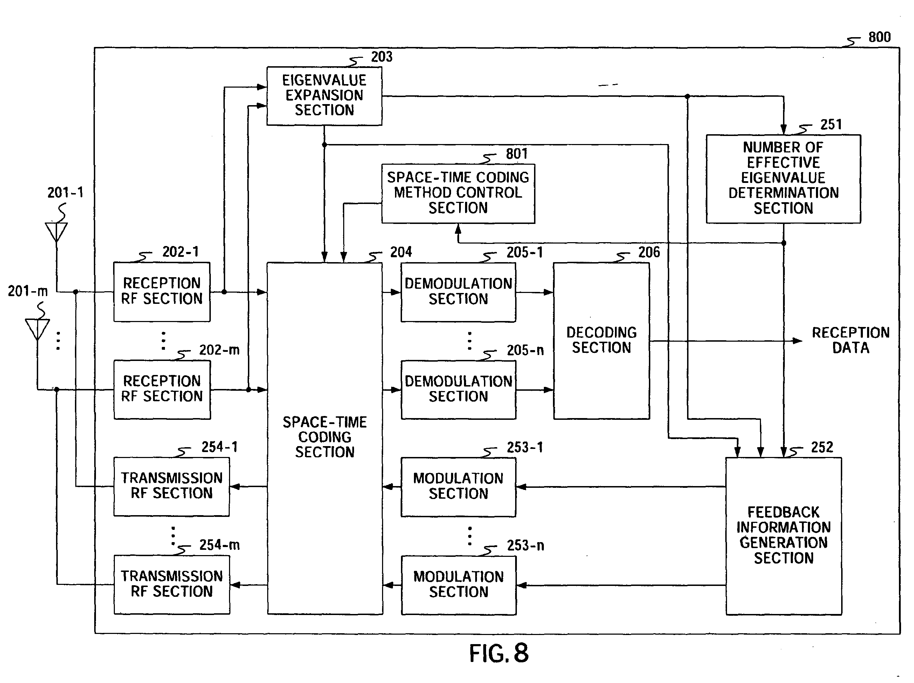

FIG.8 is a block diagram showing a configuration of the reception side communication apparatus according to Embodiment 2 of the present invention. In reception side communication apparatus 800 shown in FIG.8, component parts that are common with reception side communication apparatus 200 in FIG.3 are assigned to the same codes as in FIG. 3, and their explanations will be omitted.

Compared to reception side communication apparatus 200 in FIG.3, reception side apparatus 800 shown in FIG.8 adopts a configuration in which space-time coding method control section 801 is added.

Number of effective eigenvalues determination section 251 outputs the number of effective eigenvalues to feedback information generation section 252 and space-time coding method control section 801.

Space-time coding control section 801 has a table shown in FIG.7, determines a space-time coding method based on the number of the effective eigenvalues, and indicates the determined space-time coding method to space-time coding section 204.

Space-time coding section 204 combines the signals output from reception RF sections 202-1 to 202-m using the space-time coding method indicated by the control information contained in the received signals, and outputs the results to demodulation sections 205-1 to 205-n.

In addition, space-time coding section 204 divides the signals output from modulation sections 253-1 to 253-n into the number of antenna elements m, performs complex multiplication processing on the signals by the space-time coding method indicated by space-time coding method control section 801, and outputs these signals to transmission RF sections 254-1 to 254-m.

In this way, according to this embodiment, by adaptively controlling a space-time coding method based on the number of effective eigenvalues in a communication system using MIMO, spatial multiplex effect can be increased when the propagation environment is good, and diversity effect can be increased when the propagation environment is poor, so that it is possible to improve the overall system throughput.

As is obvious from the above description, in a communication system using MIMO, by adaptively controlling the number of transmission streams based on the number of effective eigenvalues, the present invention can improve performance. Furthermore, by adaptively controlling a space-time coding method based on the number of effective eigenvalues, it is possible to improve the overall system throughput.

In the above-mentioned embodiments, although a case is described where a coding rate and a modulation scheme are adaptively controlled based on the eigenvalue, the present invention is not limited to this, and is applicable to a communication system where a coding rate or a modulation scheme is fixed.

### Industrial Applicability

The present invention is suitable for use in a communication apparatus used in a communication system using MIMO.

## Claims

1. A transmitting apparatus (100) that transmits a signal to a receiving apparatus (200) using multiple-input multiple-output, comprising:
a reception section (102);
a transmission section (155),
**characterized in that**
the reception section (102) receives information indicating the number of effective eigenvalues, said number of effective eigenvalues being the number of eigenvalues greater than a predetermined threshold and calculated at the receiving apparatus (200)
a number of multiplex sequences control section (151) determines the number of multiplex sequences based on the number of effective eigenvalues, and performs serial/parallel conversion on a sequence of transmission data into said number of multiplex sequences of transmission data; and
the transmission section (155) transmits the transmission data of each sequence of said number of multiplex sequences obtained after serial/parallel conversion via different transmission streams by space-time coding.

2. The transmitting apparatus (100) according to claim 1, wherein the number of multiplex sequences control section (151) increases the number of multiplex sequences of the transmission data as the number of the effective eigenvalues increases.

3. The transmitting apparatus (100) according to claim 1, wherein the transmission section (155) controls a space-time coding method based on the number of effective eigenvalues.

4. A communication method performing a communication using multiple-input multiple-output between two communication apparatuses a transmitting apparatus (100) and a receiving apparatus (200), the method comprising the steps of:
in the transmitting apparatus (100), forming a predetermined directivity by array antennas (101), and transmitting a signal from each antenna (101) to the receiving apparatus (200);
in the receiving apparatus (200), calculating an eigenvalue by performing eigenvalue calculation using a received signal,
**characterized by**
in the receiving apparatus (200) calculating the number of effective eigenvalues, said number of effective eigenvalues being the number of eigenvalues greater than a predetermined threshold, and transmitting information containing the number of effective eigenvalues to the transmitting apparatus (100); and
in the transmitting apparatus (100), controlling the number of multiplex sequences of the transmission data based on the number of effective eigenvalues performing serial/parallel conversion on a sequence of transmission data into said number of multiplex sequences of transmission data, and transmitting the transmission data of each sequence via different transmission streams by space-time coding to the receiving apparatus (200).

## Patentansprüche

1. Eine Sendevorrichtung (100), die unter Verwendung des MIMO-Verfahrens (multiple-input multiple-output) ein Signal zu einer Empfangsvorrichtung (200) sendet, umfassend:
einen Empfangsabschnitt (102);
einen Sendeabschnitt (155),
**dadurch gekennzeichnet, dass**
der Empfangsabschnitt (102) Informationen empfängt, die die Anzahl effektiver Eigenwerte anzeigen, wobei die Anzahl effektiver Eigenwerte die Anzahl von Eigenwerten ist, die über einem vorgegebenen Schwellenwert liegt und an der Empfangsvorrichtung (200) berechnet wird,
ein Abschnitt (151) zum Steuern einer Anzahl von Multiplex-Sequenzen die Anzahl von Multiplex-Sequenzen auf Basis der Anzahl effektiver Eigenwerte bestimmt und Seriell-Parallel-Umwandlung einer Sequenz von Sendedaten in die Anzahl von Multiplex-Sequenzen von Sendedaten durchführt; und
der Sendeabschnitt (155) die Sendedaten jeder Sequenz der Anzahl nach Seriell-Parallel-Umwandlung erzeugter Multiplex-Sequenzen über verschiedene Sendeströme durch Raum-Zeit-Kodierung sendet.

2. Die Sendevorrichtung (100) nach Anspruch 1, wobei der Abschnitt (151) zum Steuern der Anzahl von Multiplex-Sequenzen die Anzahl von Multiplex-Sequenzen der Sendedaten erhöht, wenn die Anzahl der effektiven Eigenwerte zunimmt.

3. Die Sendevorrichtung (100) nach Anspruch 1, wobei der Sendeabschnitt (155) ein Raum-Zeit-Kodierverfahren auf Basis der Anzahl effektiver Eigenwerte steuert.

4. Ein Kommunikationsverfahren, mit dem eine Kommunikation unter Verwendung des MIMO-Verfahrens (multiple-input multiple-output) zwischen zwei Kommunikationsvorrichtungen, einer Sendevorrichtung (100) und einer Empfangsvorrichtung (200), durchgeführt wird, wobei das Verfahren die folgenden Schritte umfasst:
Ausbilden einer vorgegebenen Richtcharakteristik mit Array-Antennen (101) und Senden eines Signals von jeder Antenne (101) zu der Empfangsvorrichtung (200) durch die Sendevorrichtung (100);
Berechnen eines Eigenwertes durch Durchführen von Eigenwertberechnung unter Verwendung eines empfangenen Signals in der Empfangsvorrichtung,
**gekennzeichnet durch**
Berechnen der Anzahl effektiver Eigenwerte, wobei die Anzahl effektiver Eigenwerte die Anzahl von Eigenwerten ist, die über einem vorgegebenen Schwellenwert liegt, und Senden von Informationen, die die Anzahl effektiver Eigenwerte enthalten, zu der Sendevorrichtung (100) in der Empfangsvorrichtung (200); und
Steuern der Anzahl der Multiplex-Sequenzen der Sendedaten auf Basis der Anzahl effektiver Eigenwerte, Durchführen von Seriell-Parallel-Umwandlung einer Sequenz von Sendedaten in die Anzahl von Multiplex-Sequenzen von Sendedaten und Senden der Sendedaten jeder Sequenz über verschiedene Sendeströme **durch** Raum-Zeit-Kodierung zu der Empfangsvorrichtung (200) in der Sendevorrichtung (100).

## Revendications

1. Appareil de transmission (100) qui transmet un signal à un appareil de réception (200) en utilisant multiple entrée - multiple sortie (multiple-input multiple-output), comprenant :
une section de réception (102) ;
une section de transmission (155),
**caractérisé en ce que**
la section de réception (102) reçoit une information indiquant le nombre de valeurs propres effectives, ledit nombre de valeurs propres effectives étant le nombre de valeurs propres supérieures à un seuil prédéterminé et calculé au niveau de l'appareil de réception (200)
une section (151) de commande d'un nombre de séquences multiplex détermine le nombre de séquences multiplex sur la base du nombre de valeurs propres effectives, et effectue une conversion série/parallèle sur une séquence de données de transmission en ledit nombre de séquences multiplex de données de transmission ; et
la section de transmission (155) transmet les données de transmission de chaque séquence dudit nombre de séquences multiplex obtenu après la conversion série/parallèle par l'intermédiaire de flux de transmission différents par un codage espace-temps.

2. Appareil de transmission (100) selon la revendication 1, dans lequel la section (151) de commande du nombre de séquences multiplex augmente le nombre de séquences multiplex des données de transmission à mesure que le nombre de valeurs propres effectives augmente.

3. Appareil de transmission (100) selon la revendication 1, dans lequel la section de transmission (155) commande un procédé de codage espace-temps sur la base du nombre de valeurs propres effectives.

4. Procédé de communication effectuant une communication en utilisant multiple entrée-multiple sortie (multiple-input multiple-output) entre deux appareils de communication ; un appareil de transmission (100) et un appareil de réception (200), le procédé comprenant les étapes consistant à :
dans l'appareil de transmission (100), former une directivité prédéterminée par des antennes réseau (101), et transmettre un signal depuis chaque antenne (101) à l'appareil de réception (200) ;
dans l'appareil de réception (200), calculer une valeur propre en effectuant un calcul de valeurs propres en utilisant un signal reçu,
**caractérisé par**
dans l'appareil de réception (200), calculer le nombre de valeurs propres effectives, ledit nombre de valeurs propres effectives étant le nombre de valeurs propres supérieures à un seuil prédéterminé, et transmettre une information contenant le nombre de valeurs propres effectives à l'appareil de transmission (100) ; et
dans l'appareil de transmission (100), commander le nombre de séquences multiplex des données de transmission sur la base du nombre de valeurs propres effectives, effectuer une conversion série/parallèle sur une séquence de données de transmission en ledit nombre de séquences multiplex de données de transmission et transmettre les données de transmission de chaque séquence par l'intermédiaire de flux de transmission différents par un codage espace-temps à l'appareil de réception (200).
